# FASCICULE DE BREVET EUROPEEN

(11) **EP 3 205 470 B1**
(45) Date de publication et mention de la délivrance du brevet: **06.04.2022**
(21) Numéro de dépôt: 17155901.6
(22) Date de dépôt: 13.02.2017
(51) Int. Cl.: B29C 45/14, B29C 33/00, B29C 33/12, B29C 33/44, B29C 45/42

(54) **DISPOSITIF DE FABRICATION ET PROCÉDÉ PAR SURMOULAGE PAR INJECTION, D'UNE PIÈCE COMPORTANT UN INSERT ET UNE SYSTÈME DE COMMANDE UN TEL DISPOSITIF**
VORRICHTUNG UND VERFAHREN ZUR HERSTELUNG EINES TEILES MIT EINEM EINLEGETEILS DURCH ÜBERSPRITZGIESSEN SOWIE EINE STEUERUNGSSYSTEM FÜR EINE SOLCHE VORRICHTUNG
A DEVICE AND PROCESS FOR MANUFACTURING A PART HAVING AN INSERT, BY INJECTION OVERMOLDING AND A CONTROL SYSTEM FOR SUCH A DEVICE

(30) Priorité: 11.02.2016 FR 1651110
(43) Date de publication de la demande: 16.08.2017
(73) Titulaire: Institut de Recherche Technologique Jules VERNE, 44340 Bouguenais (FR)
(72) Inventeur: GUEROULT, Sébastien, 44300 Nantes (FR); BEIGBEDER, Alexandre, 53000 Laval (FR); EXERTIER, Agnès, 44100 Nantes (FR); HEINRY, Jacques, 49420 Pouancé (FR)
(74) Mandataire: Alatis

(56) Documents cités:
- EP-A1- 0 491 682
- EP-A2- 0 249 363
- EP-A2- 0 894 596
- EP-A2- 1 160 070
- WO-A1-01/60579
- WO-A1-2014/064082
- WO-A1-2015/049339
- DE-A1-102015 106 492
- DE-B3- 10 322 859
- DE-T2- 69 716 507
- JP-A- 2000 301 566
- US-A1- 2005 200 051
- US-A1- 2007 278 355
- US-B1- 6 328 548

## Description

La présente invention concerne un dispositif de fabrication, par estampage et surmoulage par injection, d'une pièce thermoplastique comportant un insert en matériau composite à base de thermoplastique.

On connait déjà, dans l'état de la technique, un dispositif de fabrication comprenant un moule comportant des première et seconde parties dont au moins la première partie est mobile, les première et seconde parties délimitant entre elles une cavité d'injection, et la première partie comportant des moyens de réception de l'insert.

L'insert est par exemple un élément composite chaud (Continuous Fiber Reinforced Thermoplastic, CFRT). Cet élément composite chaud est généralement transporté depuis un four jusqu'aux moyens de réception, au moyen d'un cadre de transport auquel l'élément composite est fixé. Ce cadre de transport est déplacé manuellement par un opérateur.

Une fois la pièce réalisée, celle-ci, ainsi que le cadre de transport, sont évacués manuellement par l'opérateur.

On connait également, d'après US 6 328 548, un dispositif de fabrication similaire à celui du préambule de la revendication 1.

La présente invention a notamment pour but d'augmenter le rendement de fabrication de pièces au moyen d'un tel dispositif.

En particulier, l'invention vise la fabrication de pièces en matériau thermoplastique, de préférence en polyamide, et notamment de type PA6 ou PA66 ou analogues, comprenant un insert également en composite à base de matériau thermoplastique (de préférence également en polyamide ou polyoléfine, et notamment de type PA6 ou analogues). La cadence de fabrication cible est élevée, avantageusement de 60 à 90 secondes par pièce finie. La température dans le moule d'estampage surmoulage par injection est avantageusement comprise entre 100 et 160°C.

Un problème technique supplémentaire est de réussir à obtenir des pièces surmoulées, sans étape de parachèvement des pièces après le procédé d'estampage surmoulage, notamment pour des pièces de géométrie complexe.

A cet effet, l'invention a notamment pour objet un dispositif de fabrication, par estampage et moulage par injection, selon la revendication 1.

Le dispositif de préhension permet de faciliter la mise en place de l'insert sur les moyens de réception. C'est en effet ce dispositif de préhension qui transporte l'insert, et non plus un opérateur.

Le dispositif de préhension peut notamment être automatisé, de sorte qu'un procédé de fabrication au moyen du dispositif de fabrication de l'invention ne nécessite plus d'attendre l'intervention d'un opérateur pour la mise en place de l'insert dans le moule.

Un dispositif de fabrication selon l'invention peut comporter en outre l'une ou plusieurs des caractéristiques suivantes, prises seules ou selon toutes combinaisons techniquement envisageables.
- Le dispositif de fabrication comporte des moyens de maintien d'une pièce finie dans la seconde partie de moule lorsque la première partie de moule s'écarte de la seconde partie de moule.
- Le dispositif de préhension est automatisé.
- La seconde partie de moule comporte des moyens d'injection, comprenant des buses d'injection.
- La première partie de moule comporte des rainures, notamment une rainure périphérique et une pluralité de rainures intérieures.
- Une pluralité des buses d'injection est répartie en regard de la rainure périphérique, et au moins l'une des buses d'injection est agencée en regard de chaque rainure intérieure.
- Le dispositif de préhension comporte des moyens de préhension à aiguilles.
- Le dispositif de fabrication comporte des moyens de contrôle de la qualité de la pièce.

L'invention concerne également un procédé de fabrication, par surmoulage par injection, d'une pièce en matériau thermoplastique comportant au moins un insert en matériau thermoplastique, au moyen d'un dispositif de fabrication tel que défini précédemment, le procédé comportant une étape d'estampage avant le surmoulage, dans le même moule, et une étape de transport de l'insert depuis un premier emplacement jusqu'aux moyens de réception de l'insert, par le dispositif de préhension de l'insert.

Avantageusement, le procédé comporte une étape de récupération d'une pièce terminée depuis la seconde partie de moule, par le dispositif de préhension.

Avantageusement, le procédé de fabrication comporte :
- le chauffage de l'insert, dans un four,
- le transport de l'insert chaud par le dispositif de préhension, depuis le premier emplacement jusqu'à la première partie de moule, dans laquelle il est installé, et maintenu par les moyens de réception,
- la récupération, par le dispositif de préhension, d'une pièce préalablement terminée depuis la seconde partie de moule, si cette pièce existe,
- le rapprochement des première et seconde parties de moule, afin de refermer la cavité d'injection, l'insert étant logé dans cette cavité d'injection,
- la mise en forme de l'insert, par estampage lors de la fermeture des première et seconde parties de moule,
- l'injection d'une résine dans la cavité d'injection, pour surmouler l'insert, afin former la pièce,
- le durcissement de la pièce,
- l'ouverture du moule en écartant la première partie de moule de la seconde partie de moule.

De manière optionnelle, le procédé comporte une étape préalable de simulation, mise en oeuvre par logiciel, des contraintes et des paramétrages du procédé relatifs à l'insert lors de l'estampage et du surmoulage, destinée à déterminer la géométrie initiale exacte de l'insert à introduire dans le moule, et le cas échéant destinée à prédire les propriétés de résistance mécanique des pièces finies obtenues, avec le cas échéant une modification par boucle de rétroaction sur les paramètres du procédé pour arriver à des propriétés cibles.

Avantageusement, le procédé comporte le transfert direct, sans étape de parachèvement de la pièce finie, vers une étape de stockage et/ou d'assemblage avec d'autres composants d'un véhicule.

L'invention concerne enfin un système de commande du dispositif de fabrication tel que défini précédemment, comportant des moyens de sélection du matériau formant l'insert et/ou de la résine à injecter, et/ou des moyens de sélection de paramètres du procédé de fabrication, en fonction de la pièce à fabriquer.

L'invention sera mieux comprise à la lecture de la description qui va suivre, donnée uniquement à titre d'exemple et faite en se référant aux figures annexées, parmi lesquelles :
- La figure 1 est une vue de dessus d'un dispositif de fabrication d'une pièce selon un exemple de mode de réalisation de l'invention ;
- La figure 2 représente des buses d'injection équipant la partie fixe du moule de la figure 1.

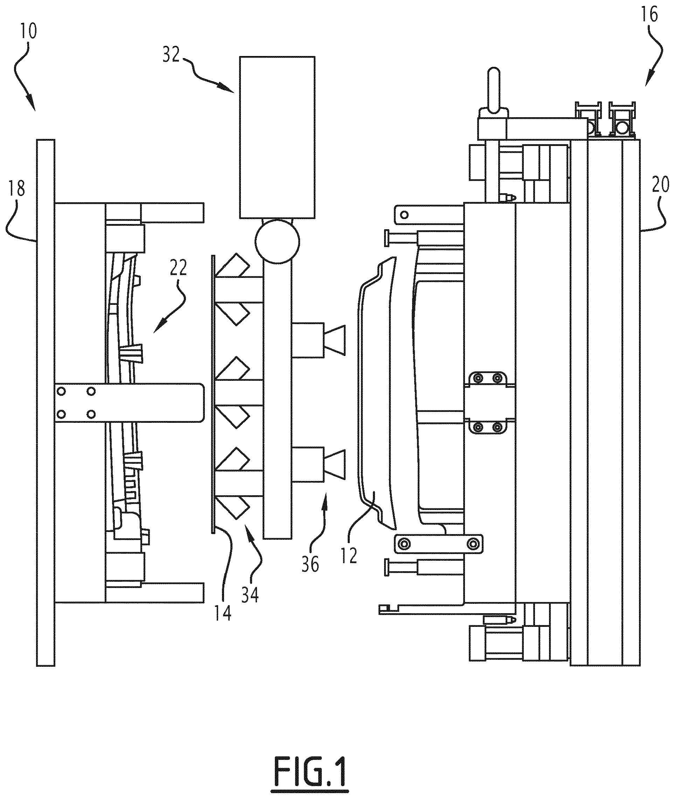

On a représenté, sur la figure 1, un dispositif 10 de fabrication d'une pièce 12 comportant au moins un premier insert 14.

Le dispositif de fabrication 10 comporte un moule 16 de moulage par injection, comprenant une première partie 18 et une seconde partie 20, mobiles l'une par rapport à l'autre. En d'autres termes, l'une des première 18 et seconde 20 parties, au moins, est mobile. Par exemple, la première partie 18 est mobile, et la seconde partie 20 est fixe.

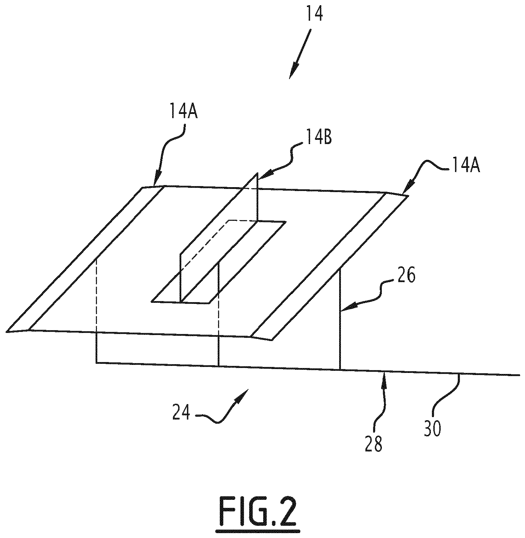

Les première 18 et seconde 20 parties délimitent ensemble de manière classique une cavité d'injection. Plus particulièrement, la cavité d'injection comporte des rainures 14A, 14B, représentées sur la figure 2, ménagées dans la première partie de moule 18, comprenant une rainure périphérique 14A délimitant la pièce 12 à fabriquer, et des rainures internes 14B.

La première partie 18 mobile est montée de manière classique sur des vérins, permettant le déplacement de la première partie mobile 18 par rapport à la seconde partie fixe 20, notamment en s'écartant de cette seconde partie 20, par translation.

Dans l'exemple représenté, le moule 16 est vertical, c'est-à-dire que la jonction entre la première 18 et la seconde 20 parties est verticale, et que la première partie 18 est déplaçable horizontalement.

Dans l'exemple représenté, la première partie 18, comporte des moyens 22 de réception du premier insert 14. Le premier insert 14 est ainsi maintenu en position dans la cavité d'injection.

On notera que le premier insert 14 présente avantageusement des ouvertures autorisant le passage d'une résine injectée de part et d'autre de cet insert.

Le premier insert 14 est généralement un insert composite chaud, en thermoplastique renforcé de fibres continues (« Continuous Fiber Reinforced Thermoplastic », CFRT). Le matériau composite formant l'insert comprend une matrice thermoplastique et des fibres de renfort (renforts continus) connues de l'homme du métier.

De manière optionnelle, l'insert 14 est réalisé par assemblage d'une pluralité de sous-inserts.

De manière optionnelle, l'insert 14 intègre des zones fonctionnelles, qui présentent chacune une propriété fonctionnelle (mécanique, électrique ou autre), chaque zone fonctionnelle étant réalisée dans un matériau adapté pour un procédé d'estampage/surmoulage.

Ce premier insert 14 est destiné à être mis en forme dans le moule 16, sous l'effet des parties de moule 18, 20.

Avantageusement, la première partie 18 comporte également des moyens de réception d'un second insert, notamment d'un insert métallique.

La seconde partie fixe 20, comporte des moyens d'injection 24, notamment représentés sur la figure 2, comprenant des buses d'injection 26. Les moyens d'injection 24 comportent également un réseau de distribution 28, reliant une source de résine à injecter jusqu'à chaque buse d'injection 26. Le réseau de distribution 28 comporte notamment, dans l'exemple décrit, un conduit 30 commun à toutes les buses d'injection 26.

Certaines des buses d'injection 26, notamment six d'entre elles, sont agencées à la périphérie de la cavité d'injection, et plus particulièrement au niveau la rainure périphérique 14A.

Certaines autres buses d'injection 26, notamment quatre d'entre elles, sont agencées dans la cavité d'injection, et plus particulièrement, au moins l'une d'elles est agencée au niveau de chaque rainure interne 14B.

Cette disposition des buses d'injection 26 permet une bonne répartition de la résine dans toute la cavité d'injection.

Le dispositif de fabrication 10 selon l'invention comporte par ailleurs un dispositif 32 de préhension du premier insert 14. Ce dispositif de préhension 32 est propre à transporter le premier 14 insert depuis un premier emplacement jusqu'aux moyens de réception 22 de cet insert 14.

Le dispositif de préhension 32 comporte notamment un organe de préhension 33 articulé, présentant, sur une première face destinée à être tournée vers la première partie de moule 18, des premiers moyens 34 de préhension de l'insert 14.

Les premiers moyens de préhension 34 sont de tout type envisageable, notamment à ventouses ou à aiguilles. En variante, les moyens de préhension 34 peuvent également comporter un cadre de transport à pinces, similaire au cadre de transport manuel habituellement utilisé dans l'état de la technique. Des moyens de préhension 34 à aiguilles pneumatiques ont pour avantage de pouvoir d'adapter aisément à toute forme d'insert.

Avantageusement, l'organe de préhension 33 présente également, sur une seconde face, opposée à la première, et destinée à être tournée vers la seconde partie de moule 20, des seconds moyens 36 de préhension de la pièce finie 12.

Les seconds moyens de préhension 36 sont de tout type envisageable, notamment à ventouses ou à aiguilles.

Le dispositif de préhension 32 est de préférence automatisé.

Le dispositif de préhension 32 est propre à déplacer l'organe de préhension 33 à proximité d'un convoyeur (non représenté) formant un premier emplacement sur lequel est disposé l'insert 14. Le convoyeur passe par exemple au travers d'un four, le premier emplacement étant situé en sortie de ce four.

Ainsi, l'organe de préhension 33 récupère l'insert 14 en sortie de four, pour le transporter jusqu'à la première partie de moule 18.

L'organe de préhension 33 est également propre à récupérer la pièce finie 12 depuis la seconde partie de moule 20, avant ou après avoir disposé l'insert 14 dans la première partie de moule 18, tant que cet organe de préhension 33 est disposé entre les première 18 et seconde 20 parties de moule. La pièce finie 12 est ensuite ramenée sur un second emplacement de stockage.

Il est à noter que le moule 16 comporte avantageusement des moyens de maintien de la pièce finie 12 sur la seconde partie de moule 20, destinés à assurer que cette pièce finie 12 reste sur cette seconde partie de moule 20 avant sa récupération par le dispositif de préhension 32. Ces moyens de maintien comportent par exemple des organes d'éjection portés par la première partie de moule 18, propres à maintenir la pièce finie 12 sur la seconde partie de moule 20 alors que la première partie de moule 18 s'écarte.

Le dispositif de préhension 32 permet donc d'effectuer deux opérations, d'installation de l'insert 14 et de récupération de la pièce 12, ces opérations étant manuelles dans l'état de la technique. Le dispositif de préhension 32 permet donc d'automatiser un procédé de fabrication à la chaîne de pièces 12.

On notera que, dans le cas où la pièce 12 comporte un second insert métallique, celui-ci est généralement déposé dans la première partie de moule 18 avant l'insert composite 14. A cet effet, cet insert métallique peut être disposé par le dispositif de préhension 32, préalablement au premier insert 14 ou simultanément. Dans ce second cas, le premier insert 14 est par exemple posé sur l'insert métallique sur le convoyeur, afin d'être saisis en même temps par le dispositif de préhension 32.

Avantageusement, le dispositif de fabrication 10 comporte des moyens de contrôle de la qualité de la pièce finie 12. Ces moyens de contrôle comportent pas exemple un capteur, adapté pour mesurer certaines caractéristiques de la pièce finie 12.

Le dispositif de fabrication 10 décrit précédemment permet de réaliser un procédé automatisé de fabrication d'une pièce, qui va maintenant être décrit.

Le procédé comporte la prise d'un flan en matériau en composite à base de thermoplastique (par exemple PA6, PA, PP), destiné à former l'insert 14. Le flan est par exemple formé par une plaque rigide, réalisée par drapage/plis empilés, dont la géométrie est déterminée.

Le flan est ensuite transféré dans le four, par le convoyeur, puis il est chauffé pour être rendu suffisamment déformable en vue d'un estampage.

Le flan est ensuite transporté par le convoyeur, jusqu'à l'emplacement en sortie de four, où il est récupéré par le dispositif de préhension 32.

Le dispositif de préhension 32 transporte le flan, formant l'insert 14, jusqu'à la première partie de moule 18, dans laquelle il est installé, et maintenu par les moyens de réception 22.

On notera que, de manière optionnelle, le procédé peut comporter préalablement l'installation d'un second insert métallique, avant l'installation de l'insert 14.

Suite à l'installation de l'insert 14 dans la première partie de moule 18, le dispositif de préhension récupère une pièce 12 préalablement terminée depuis la seconde partie de moule 20, si cette pièce existe.

La première partie de moule 18 est ensuite rapprochée de la seconde partie de moule 20, afin de refermer la cavité d'injection, l'insert 14 étant logé dans cette cavité d'injection.

L'insert 14 chaud est formé à la fermeture du moule, par estampage. On rappelle que l'estampage consiste à former, après chauffage pour ramolir l'insert, cet insert chaud préconsolidé (l'insert étant imprégné de résine), par pression entre deux outillages, ici formés par les parties de moule.

Une résine est ensuite injectée, par les buses d'injection, dans la cavité d'injection, pour le surmoulage de l'insert 14. La résine passe au travers des passages prévus dans l'insert 14, pour s'étendre de part et d'autre de celui-ci. Il est à noter que l'estampage et le surmoulage sont réalisés dans le même moule.

Après durcissement de la pièce 12 ainsi formée, la première partie de moule 18 est écartée de la seconde partie de moule 20. Les moyens de maintien assurent que la pièce ne soit pas éjectée de la seconde partie de moule 20.

Le procédé repart alors à l'étape initiale, et le dispositif de préhension vient installer un nouvel insert 14 dans la première partie de moule 18, et récupérer la pièce 12 pour la déposer au second emplacement de stockage.

Il est précisé que le surmoulage est réalisé pendant le temps de maintien de l'estampage.

Avantageusement, le procédé comporte une étape préalable de simulation, mise en oeuvre par un ou plusieurs logiciels, des contraintes et des paramétrages du procédé (température, cisaillement ...) relatifs à l'insert 14 lors de l'estampage et du surmoulage, destinée à déterminer la géométrie initiale exacte de l'insert à introduire dans le moule. Cette simulation permet, sans interrompre la chaîne de fabrication, et en tenant compte de la variabilité du procédé en conditions de fabrication réelles en usine (variabilité du matériau, des variations de températures, de débit d'injection ...), d'éviter une étape en aval de parachèvement requise dans l'art antérieur pour obtenir la géométrie exacte cible de la pièce finie.

En d'autres termes, le procédé comporte le transfert direct sans étape de parachèvement de la pièce finie, vers une étape de stockage et/ou d'assemblage avec d'autres composants d'un véhicule.

On réalise ainsi un procédé dit « net shape » sans retravail coûteux et complexe après surmoulage.

Les logiciels utilisés sont notamment des développements numériques sur logiciels commerciaux tels que CATIA^{®}, PLASFIB^{®}, et de manière globale tout logiciel permettant de réaliser des développés de coques. Cette variante de réalisation est particulièrement avantageuse pour des pièces finies de géométrie complexe pour lesquelles le parachèvement/ébavurage est difficile et ainsi incompatible à les cadences de production cibles élevées de l'ordre de 60 à 90 secondes par pièce finie.

Le logiciel de simulation de l'estampage est notamment destiné à déterminer des angles de cisaillement de l'insert lors de l'estampage.

Le logiciel relatif au surmoulage est par exemple Moldex3D^{®}.

Avantageusement, le procédé comporte aussi une étape préalable de simulation destinée à prédire les propriétés de résistance mécanique (comportement en fatigue, en crash ...) des pièces finies 12 obtenues.

Le cas échéant ces procédés comprennent une modification par boucle de rétroaction sur les paramètres du procédé pour arriver à des propriétés cibles.

Il est à noter que le procédé de fabrication est mis en œuvre par un système de commande du dispositif de fabrication 10, comportant des moyens de sélection du matériau formant l'insert et/ou de la résine à injecter, et/ou des moyens de sélection de paramètres du procédé de fabrication, en fonction de la pièce à fabriquer 12.

Le système de commande comporte avantageusement un logiciel capable de simuler l'estampage et le surmoulage. En variante, il comporte un premier logiciel pour l'estampage (par exemple Plasfib^{®}) et un second logiciel pour le surmoulage.

L'invention s'applique notamment aux domaines automobile et aéronautique, pour la fabrication de pièces finies utilisées comme composants de véhicules. Les pièces finies ont typiquement une envergure de l'ordre de 20 cm à 1 m.

On notera que l'invention n'est pas limitée au mode de réalisation précédemment décrit, mais pourrait présenter diverses variantes.

L'invention s'applique notamment aux domaines automobile et aéronautique, pour la fabrication de pièces finies utilisées comme composants de véhicules. Les pièces finies ont typiquement une envergure de l'ordre de 20 cm à 1 m.

On notera que l'invention n'est pas limitée au mode de réalisation précédemment décrit, mais pourrait présenter diverses variantes.

## Revendications

1. Dispositif (10) de fabrication, par estampage puis surmoulage par injection, d'une pièce (12) en matériau thermoplastique comportant au moins un insert (14) en matériau composite à base de thermoplastique, le dispositif de fabrication (10) comprenant un moule (16) comportant des première (18) et seconde (20) parties mobiles l'une par rapport à l'autre, délimitant entre elles une cavité d'injection, et la première partie de moule (18) comportant des moyens (22) de réception de l'insert (14), dans lequel le moule est conformé pour que l'estampage et le surmoulage soient réalisés dans ce même moule, et le dispositif de fabrication (10) comporte un dispositif (32) de préhension de l'insert (14), propre à transporter l'insert (14) depuis un premier emplacement jusqu'aux moyens (22) de réception de l'insert, le dispositif (10) de fabrication étant **caractérisé en ce que** :
- la première partie de moule (18) comporte des rainures (14A, 14B), notamment une rainure périphérique (14A) et une pluralité de rainures intérieures (14B) ;
- la seconde partie de moule (20) comporte des moyens d'injection (24), comprenant des buses d'injection (26),
une pluralité des buses d'injection (26) étant répartie en regard de la rainure périphérique (14), et au moins l'une des buses d'injection (26) étant agencée en regard de chaque rainure intérieure (14B).

2. Dispositif de fabrication (10) selon la revendication 1, dans lequel le dispositif de préhension (32) présente une première face comprenant des premiers moyens (34) de préhension de l'insert (14), et une seconde face opposée à la première comprenant des seconds moyens (36) de préhension d'une pièce terminée (12).

3. Dispositif de fabrication (10) selon la revendication 2, comportant des moyens de maintien d'une pièce finie (12) dans la seconde partie de moule (20) lors- que la première partie de moule (18) s'écarte de la seconde partie de moule (20)

4. Dispositif de fabrication (10) selon l'une quelconque des revendications précédentes, dans lequel le dispositif de préhension (32) est automatisé.

5. Dispositif de fabrication (10) selon l'une quelconque des revendications précédentes, dans lequel le dis- positif de préhension (32) comporte des moyens de préhension à aiguilles.

6. Dispositif de fabrication (10) selon l'une quelconque des revendications précédentes, comportant des moyens de contrôle de la qualité de la pièce (12).

7. Procédé de fabrication, par surmoulage par injection, d'une pièce (12) en matériau thermoplastique comportant au moins un insert (14) en matériau composite à base de thermoplastique, au moyen d'un dispositif de fabrication (10) selon l'une quelconque des revendications précédentes, **caractérisé en ce qu'**il comporte :
- une étape d'estampage avant le surmoulage, dans le même moule,
- une étape de transport de l'insert (14) depuis un premier emplacement jusqu'aux moyens (22) de réception de l'insert, par le dispositif (32) de préhension de l'insert (14).

8. Procédé de fabrication selon la revendication 7, au moyen d'un dispositif de fabrication selon la revendication 2, comportant une étape de récupération d'une pièce terminée depuis la seconde partie de moule (20), par le dispositif de préhension (32).

9. Procédé de fabrication selon la revendication 7 ou 8, **caractérisé en ce qu'**il comporte :
- le chauffage de l'insert (14), dans un four, le transport de l'insert (14) chaud par le dispositif de préhension (32), depuis le premier emplacement jusqu'à la première partie de moule (18), dans laquelle il est installé, et maintenu par les moyens de réception (22), la récupération, par le dispositif de préhension (32), d'une pièce (12) préalablement terminée depuis la seconde partie de moule (20), si cette pièce existe,
- le rapprochement des première (18) et seconde (20) parties de moule, afin de refermer la ca- vité d'injection, l'insert (14) étant logé dans cette cavité d'injection,
- la mise en forme de l'insert (14), par estampage lors de la fermeture des première (18) et seconde (20) parties de moule,
- l'injection d'une résine dans la cavité d'injection, pour surmouler l'insert (14), afin former la pièce (12),
- le durcissement de la pièce (12),
- l'ouverture du moule en écartant la première partie de moule (18) de la seconde partie de moule (20).

10. Procédé de fabrication selon la revendication 9, comportant :
- une étape préalable de simulation, mise en œuvre par logiciel, des contraintes et des paramétrages du procédé relatifs à l'insert (14) lors de l'estampage et du surmoulage, destinée à déterminer la géométrie initiale exacte de l'insert à introduire dans le moule, et le cas échéant aussi destinée à prédire les propriétés de résistance mécanique des pièces finies (12) obtenues,
avec le cas échéant une modification par boucle de rétroaction sur les paramètres du procédé pour arriver à des propriétés cibles,
- le transfert direct sans étape de parachèvement de la pièce finie, vers une étape de stockage et/ou d'assemblage avec d'autres composants d'un véhicule.

11. Ensemble d'un dispositif de fabrication (10) selon l'une quelconque des revendications 1 à 6 et d'un système de commande dudit dispositif de fabrication (10), **caractérisé en ce que** le système de commande comporte des moyens de sélection du matériau formant l'insert et/ou de la résine à injecter, et/ou des moyens de sélection de paramètres du procédé de fabrication, en fonction de la pièce à fabriquer (12).

## Patentansprüche

1. Vorrichtung (10) zum Herstellen eines Werkstücks (12) aus thermoplastischem Material durch Prägen und anschließendes Umspritzen, das wenigstens einen Einsatz (14) aus einem Verbundwerkstoff auf thermoplastischer Basis aufweist, wobei die Herstellungsvorrichtung (10) eine Form (16) umfasst, die einen ersten (18) und einen zweiten (20) Teil aufweist, die relativ zueinander beweglich sind, die zwischen sich einen Einspritzhohlraum begrenzen, und wobei das erste Formteil (18) Mittel (22) zum Aufnehmen des Einsatzes (14) aufweist, wobei die Form so ausgebildet ist, dass das Prägen und das Umspritzen in derselben Form ausgeführt werden, und die Herstellungsvorrichtung (10) eine Vorrichtung (32) zum Greifen des Einsatzes (14) aufweist, die geeignet ist, den Einsatz (14) von einer ersten Stelle zu den Mitteln (22) zum Aufnehmen des Einsatzes zu transportieren, wobei die Herstellungsvorrichtung (10) **dadurch gekennzeichnet ist, dass**:
- das erste Formteil (18) Nuten (14A, 14B) aufweist, insbesondere eine Umfangsnut (14A) und mehrere Innennuten (14B);
- das zweite Formteil (20) Einspritzmittel (24) aufweist, die Einspritzdüsen (26) umfassen,
wobei mehrere Einspritzdüsen (26) gegenüber der Umfangsnut (14) verteilt sind, und wenigstens eine der Einspritzdüsen (26) gegenüber jeder Innennut (14B) angeordnet ist.

2. Herstellungsvorrichtung (10) nach Anspruch 1, wobei die Greifvorrichtung (32) eine erste Seite, die erste Mittel (34) zum Greifen des Einsatzes (14) umfasst, und eine zweite, der ersten gegenüberliegende Seite vorweist, die zweite Mittel (36) zum Greifen eines fertiggestellten Werkstücks (12) umfasst.

3. Herstellungsvorrichtung (10) nach Anspruch 2, die Mittel zum Halten eines fertigen Werkstücks (12) in dem zweiten Formteil (20) aufweist, wenn sich das erste Formteil (18) von dem zweiten Formteil (20) wegbewegt.

4. Herstellungsvorrichtung (10) nach einem der vorhergehenden Ansprüche, wobei die Greifvorrichtung (32) automatisiert ist.

5. Herstellungsvorrichtung (10) nach einem der vorhergehenden Ansprüche, wobei die Greifvorrichtung (32) Nadelgreifmittel aufweist.

6. Herstellungsvorrichtung (10) nach einem der vorhergehenden Ansprüche, die Mittel für die Qualitätskontrolle des Werkstücks (12) aufweist.

7. Verfahren zum Herstellen eines Werkstücks (12) aus thermoplastischem Material, das wenigstens einen Einsatz (14) aus einem Verbundwerkstoff auf thermoplastischer Basis aufweist, durch Umspritzen mittels einer Herstellungsvorrichtung (10) nach einem der vorhergehenden Ansprüche, **dadurch gekennzeichnet, dass** es Folgendes aufweist:
- einen Schritt des Prägens vordem Umspritzen in derselben Form,
- einen Schritt des Transportierens des Einsatzes (14) von einer ersten Stelle zu den Mitteln (22) zum Aufnehmen des Einsatzes durch die Vorrichtung (32) zum Greifen des Einsatzes (14).

8. Herstellungsverfahren nach Anspruch 7 mittels einer Herstellungsvorrichtung nach Anspruch 2, das einen Schritt eines Zurückholens eines fertiggestellten Werkstücks aus dem zweiten Formteil (20) durch die Greifvorrichtung (32) aufweist.

9. Herstellungsverfahren nach Anspruch 7 oder 8, **dadurch gekennzeichnet, dass** es Folgendes aufweist:
- Erhitzen des Einsatzes (14) in einem Ofen, Transportieren des heißen Einsatzes (14) durch die Greifvorrichtung (32) von der ersten Stelle zu dem ersten Formteil (18), in das er eingebaut wird und durch die Aufnahmemittel (22) gehalten wird, Zurückholen eines zuvor fertiggestellten Werkstücks (12) durch die Greifvorrichtung (32) aus dem zweiten Formteil (20), falls dieses Werkstück vorhanden ist,
- Zusammenführen des ersten (18) und des zweiten (20) Formteils, um den Einspritzhohlraum wieder zu schließen, wobei der Einsatz (14) in diesem Einspritzhohlraum untergebracht ist,
- Formen des Einsatzes (14) durch Prägen während des Schließens des ersten (18) und des zweiten (20) Formteils,
- Einspritzen eines Harzes in den Einspritzhohlraum zum Umspritzen des Einsatzes (14), um das Werkstück (12) auszubilden,
- Aushärten des Werkstücks (12),
- Öffnen der Form bei Wegbewegen des ersten Formteils (18) von dem zweiten Formteil (20).

10. Herstellungsverfahren nach Anspruch 9, das Folgendes aufweist:
- einen vorherigen Simulationsschritt, der durch Software implementiert wird, von Belastungen und Verfahrensparametern bezüglich des Einsatzes (14) während des Prägens und des Umspritzens, der dazu bestimmt ist, die genaue Anfangsgeometrie des in die Form einzuführenden Einsatzes zu ermitteln, und der gegebenenfalls auch dazu bestimmt ist, die Eigenschaften der mechanischen Festigkeit der erhaltenen fertigen Werkstücke (12) vorherzusagen,
gegebenenfalls mit einer Änderung durch Rückkopplungsschleife auf die Verfahrensparameter zum Erreichen von Zieleigenschaften,
- direktes Überführen ohne Fertigstellungsschritt des fertigen Werkstücks zu einem Lagerungs- und/oder Montageschritt mit anderen Komponenten eines Fahrzeugs.

11. Anordnung einer Herstellungsvorrichtung (10) nach einem der Ansprüche 1 bis 6 und eines Steuersystems der Herstellungsvorrichtung (10), **dadurch gekennzeichnet, dass** das Steuersystem Mittel zum Auswählen des Materials, das den Einsatz ausbildet, und/oder des einzuspritzenden Harzes und/oder Mittel zum Auswählen von Parametern des Herstellungsverfahrens in Abhängigkeit von dem herzustellenden Werkstück (12) aufweist.

## Claims

1. Device (10) for manufacturing, by stamping then injection overmolding, a part (12) made of thermoplastic material and comprising at least one insert (14) made of a thermoplastic-based composite, the manufacturing device (10) including a mold (16) which comprises a first part (18) and a second part (20) that are movable relative to each other and delimit therebetween an injection cavity, and the first mold part (18) comprising means (22) for receiving the insert (14), the mold being designed such that the stamping and the overmolding are carried out in this same mold, and the manufacturing device (10) comprising a device (32) which is intended for gripping the insert (14) and is suitable for transporting the insert (14) from a first location to the means (22) for receiving the insert, the manufacturing device (10) being **characterized in that**:
- the first mold part (18) comprises grooves (14A, 14B), in particular a peripheral groove (14A) and a plurality of interior grooves (14B);
- the second mold part (20) comprises injection means (24), including injection nozzles (26),
a plurality of injection nozzles (26) being distributed opposite the peripheral groove (14), and at least one of the injection nozzles (26) being arranged opposite each inner groove (14B).

2. Manufacturing device (10) according to claim 1, wherein the gripping device (32) has a first face including first means (34) for gripping the insert (14), and a second face which is opposite the first and includes second means (36) for gripping a finished part (12).

3. Manufacturing device (10) according to claim 2, comprising means for retaining a finished part (12) in the second mold part (20) when the first mold part (18) moves away from the second mold part (20).

4. Manufacturing device (10) according to any of the preceding claims, wherein the gripping device (32) is automated.

5. Manufacturing device (10) according to any of the preceding claims, wherein the gripping device (32) comprises needle gripping means.

6. Manufacturing device (10) according to any of the preceding claims, comprising means for controlling the quality of the part (12).

7. Method for manufacturing, by injection overmolding, a part (12) made of thermoplastic material and comprising at least one insert (14) made of a thermoplastic-based composite material, by means of a manufacturing device (10) according to any of the preceding claims, **characterized in that** said method comprises:
- a stamping step before the overmolding, in the same mold; and
- a step of transporting, by means of the device (32) for gripping the insert (14), the insert (14) from a first location to the means (22) for receiving the insert.

8. Manufacturing method according to claim 7, using a manufacturing device according to claim 2, comprising a step of recovering a finished part from the second mold part (20) by means of the gripping device (32).

9. Manufacturing method according to either claim 7 or claim 8, **characterized in that** it comprises:
- heating the insert (14) in an oven; transporting, by means of the gripping device (32), the hot insert (14) from the first location to the first mold part (18), in which it is installed and is held by the receiving means (22); recovering, by means of the gripping device (32), a previously finished part (12) from the second mold part (20), if this part is provided;
- bringing together the first mold part (18) and the second mold part (20) in order to close the injection cavity, the insert (14) being accommodated in this injection cavity;
- shaping the insert (14) by stamping during the closing of the first mold part (18) and the second mold part (20);
- injecting a resin into the injection cavity so as to overmold the insert (14) in order to form the part (12);
- hardening the part (12); and
- opening the mold by separating the first mold part (18) from the second mold part (20).

10. Manufacturing method according to claim 9, comprising:
- a preliminary step, implemented by software, of simulating the constraints and settings of the method that relate to the insert (14) during the stamping and the overmolding, which simulation is intended to determine the exact initial geometry of the insert to be introduced into the mold, and if necessary is also intended to predict the mechanical strength properties of the finished parts (12) obtained,
with, if necessary, a modification by feedback loop on the parameters of the method so as to arrive at target properties; and
- direct transfer, without a step of finishing the finished part, to a storage step and/or to a step of joining together with other components of a vehicle.

11. Assembly of a manufacturing device (10) according to any of claims 1 to 6 and of a system for controlling said manufacturing device (10), **characterized in that** the control system comprises means for selecting the material forming the insert and/or the resin to be injected, and/or means for selecting parameters of the manufacturing method according to the part (12) to be manufactured.
